# EUROPÄISCHE PATENTSCHRIFT

(11) **EP 0 622 554 B1**
(45) Veröffentlichungstag und Bekanntmachung des Hinweises auf die Patenterteilung: **22.01.1997**
(21) Anmeldenummer: 94106003.0
(22) Anmeldetag: 18.04.1994
(51) Int. Cl.: F16B 39/38

(54) **Sicherungsmutter**
Lock nut
Ecrou de blocage

(30) Priorität: 27.04.1993 DE 4313809
(43) Veröffentlichungstag der Anmeldung: 02.11.1994
(73) Patentinhaber: FLAIG UND HOMMEL GmbH & Co. KG, Handels- und Besitzgesellschaft, D-78554 Aldingen/Württ. (DE)
(72) Erfinder: Flaig, Christian, D-78554 Aldingen/Württ (DE)
(74) Vertreter: Liesegang, Roland, Dr.-Ing.

(56) Entgegenhaltungen:
- DE-A- 2 638 560
- FR-A- 850 800
- US-A- 3 522 830

## Beschreibung

Die Erfindung betrifft eine Sicherungsmutter nach dem Oberbegriff von Patentanspruch 1. Eine solche Sicherungsmutter ist aus der DE-PS 26 38 560 bekannt.

Diese bekannte Sicherungsmutter weist ausgezeichnete Sicherungseigenschaften auf und hat sich deshalb auf dem Markt durchgesetzt. In einigen Fällen der Praxis, etwa bestimmten Muttergrößen oder bei extremen Temperaturbelastungen, wäre jedoch eine ewas größere Elastizität der Ringscheibe erwünscht. Hierzu würde der Durchschnitts-Fachmann eine Vergrößerung der Segmentaussparungen, eine Verminderung der Scheibendicke und/oder die Wahl eines elastischeren Scheibenmaterials in Betracht ziehen, was jedoch nach Feststellungen des Erfinders problematisch hinsichtlich der Sicherungseigenschaften der Mutter sein dürfte.

Aufgabe der Erfindung ist es, die Sicherungsmutter der eingangs erwähnten Art bezüglich der Elastizität ihrer Ringscheibe zu verbessern, ohne dabei jedoch die Sicherungsqualität zu beeinträchtigen. Die Lösung dieser Aufgabe ergibt sich aus Patentanspruch 1.

Gemäß der Erfindung werden also in die stehenbleibenden Umfangsbereiche der Ringscheibe Kerben eingeformt, wobei jedoch die Kerben nicht tiefer als angegeben sein dürfen, um so einen durchgehenden Innenringbereich der Ringscheibe zu gewährleisten, der für die erforderliche Stabilität sorgt.

Die Erfindung ist im folgenden an einem Ausführungbeispiel anhand von Zeichnungen näher erläutert. Es zeigen
- Fig. 1: eine Draufsicht auf eine Sicherungs-Ringscheibe zum Einsatz bei einer Sicherungsmutter nach der Erfindung
- Fig. 2: eine Draufsicht auf eine Sicherungsmutter mit eingesetzter Sicherungs-Ringscheibe gemäß Fig. 1
- Fig. 3 und 4: Schnitte nach der Linie V-V in Fig. 2 in vormontierem und fertigmontiertem Zustand der Sicherungsmutter.

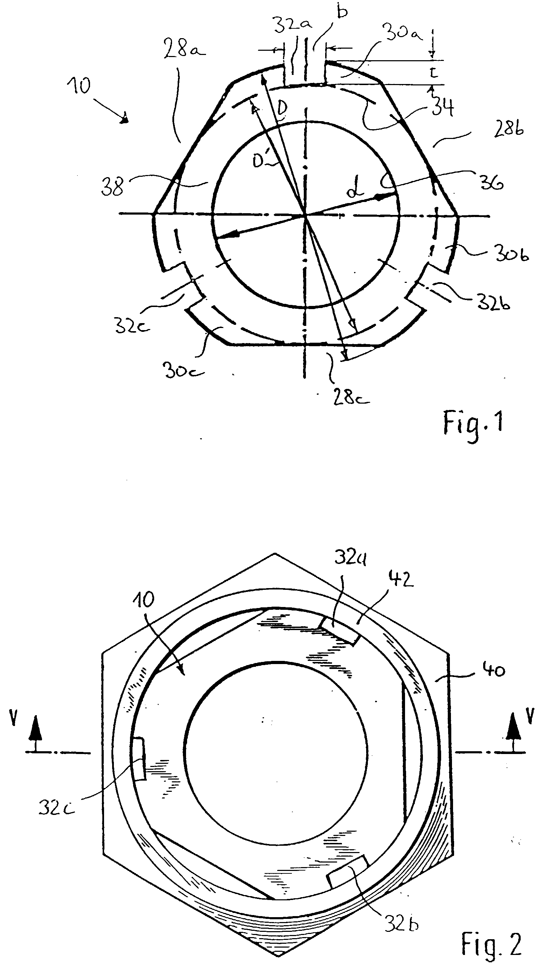

Fig. 1 zeigt eine Ausführungsform der erfindungsgemäßen Sicherungs-Ringscheibe. Die Ringscheibe 10 mit Außendurchmesser D und Innendurchmesser d weist drei weggeschnittene Kreissegmente 28a, 28b, 28c auf. Die zwischen diesen weggeschnittenen Kreissegmente verbleibenden Umfangsbereiche der Ringscheibe 10 sind mit 30a, 30b, 30c bezeichnet. In jeden dieser Umfangsbereiche 30a, 30b, 30c ist mittig eine Kerbe 32a, 32b, 32c rechteckiger Gestalt mit parallelen Seitenwänden eingeformt. Dabei ist die radiale Tiefe t dieser Kerben so bemessen, daß sie gleich der maximalen Tiefe der weggeschnittenen Kreissegmente 28a, 28b, 28c ist. Damit ergibt sich zwischen einem - gedachten - eingeschriebenen Kreis 34 mit Durchmesser D' und der Innenkante 36 der Ringscheibe 30 ein innerer Ringbereich 38, der frei von Aussparungen, Kerben oder dergleichen ist und für die erforderliche Stabilität sorgt. Die maximale radiale Tiefe der weggeschnittenen Kreissegmente 28a, 28b, 28c liegt vorzugsweise bei einem Drittel der maximalen radialen Breite der Sicherungs-Ringscheibe 10. Die Breite b der Kerben 32a, 32b, 32c liegt vorzugsweise im Bereich zwischen einem Viertel und einem Drittel der Umfangserstreckung des jeweiligen Umfangsbereichs 30a, 30b, 30c.

Bei allen Ausführungsformen können die Kerben, ebenso wie die weggeschnittenen Kreissegmente, mit der Herstellung der Sicherungs-Ringscheibe 10 in diese eingeformt oder nachträglich in die Ringscheibe eingeschnitten werden. Außerdem können die Kerben in Form von Teilkreisbahnen eingeformt werden. Die Sicherungs-Ringscheibe 10 besitzt eine Dicke in etwa entsprechend der Gewindesteigung des Muttergewindes; d.h., die Scheibendicke wird durch die Gewindesteigung bestimmt, wobei mindestens ein vollständiger Gewindegang in die Sicherungs-Ringscheibe einformbar ist. Die Sicherungs-Ringscheibe besteht vorzugsweise aus Federbandstahl.

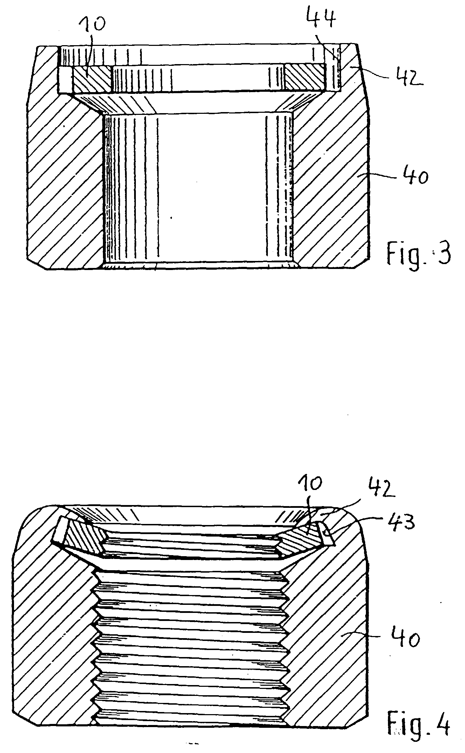

Aus Fig. 2 bis 4 ist ersichtlich, wie eine erfindungsgemäße Sicherungsmutter mit der Sicherungs-Ringscheibe 10 von Fig. 3 hergestellt werden kann. Gemäß diesen Figuren besitzt der Körper 40 einer Sechskantmutter an seinem Ende einen konzentrischen Halsfortsatz 42, dessen zylindrische Innenwand gegenüber dem Muttergewinde nach außen versetzt ist und eine Aussparung 44 bildet. In diese Aussparung 44 ist eine Sicherungs-Ringscheibe 10 eingelegt, deren mit den Kerben versehene Umfangsbereiche gemäß Fig. 2 sich symmetrisch am Boden 43 des Halsfortsatzes 42 abstützen. Die Herstellung des in Fig. 2 und 3 gezeigten Mutterrohlings, welcher in der ersten Herstellungsstufe noch kein Gewinde aufweist, kann in dem Fachmann geläufiger Weise erfolgen.

Fig. 4 zeigt dann, daß der Halsfortsatz 42 an seinem oberen Ende durch Umbördeln eingezogen ist, so daß die Ringscheibe 10 nun in der auf diese Weise entstandenen Nut axial unverschieblich gehalten ist. Nach dieser Festlegung der Ringscheibe 10 wird mit einem üblichen Werkzeug ein Gewinde in den Mutterkörper 40 eingeschnitten. Da die Ringscheibe 10 im wesentlichen denselben Innendurchmesser aufweist wie der Mutterkörper 40, schneidet dabei zwangsläufig das Werkzeug auch in die innere Randkante der Ringscheibe 10 ein dem Muttergewinde entsprechendes Gewinde ein. Darauf wird mittels eines Druckstempels oder dergleichen der innere Bereich der Ringscheibe 10 geringfügig axial in Richtung zum Muttergewinde hin verdrückt, so daß die Scheibe 10, wie am besten aus Fig. 4 ersichtlich, eine Wölbung erhält. Dadurch ergibt sich, daß das Muttergewinde und das Innengewinde der Sicherungs-Ringscheibe gegeneinander axial versetzt sind. Die Verdrückung der Scheibe sollte etwa einem Viertel bis zur Hälfte der Gewindesteigung entsprechen, so daß die der Versatz der beiden Gewinde gegeneinander zwischen einem Viertel und der Hälfte eines Gewindeganges liegt.

Ein nicht gezeigter, in die Mutter eingeschraubter Gewindebolzen wird dann allseitig von der Ringscheibe 10 festgeklemmt,wobei die Federkraft der Ringscheibe in axialer Richtung für die Klemmkraft maßgebend ist. Durch die erfindungsgemäße Gestaltung der Ringscheibe mit den Kerben wird die Fedrigkeit und Elastizität der Ringscheibe gegenüber bekannten Sicherungs-Ringscheiben erhöht, ohne deren Stabilität zu beeinträchtigen. Dadurch können einerseits höhere Klemmkräfte erzielt werden, andererseits ist besser gewährleistet, daß die Sicherungsmutter auch bei einer mehrmaligen Verwendung ihre ursprüngliche Elastizität und dadurch ihre Brauchbarkeit behält. Besonders vorteilhaft ist auch die scharfkantige bzw. spitzwinklige Ausbildung der Kanten im Bereich der Kerben, die zusätzlich ein Verdrehen der Sicherungsscheibe beim Einschrauben eines Gewindebolzens verhindern, weil sich diese Kanten in die durch den umgebördelten Halsfortsatz 42 gebildete Nut 43 (s. Fig. 4) einkrallen.

Selbstverständlich ist die Erfindung nicht auf die dargestellten Ausführungsbeispiele begrenzt, insbesondere was die Anzahl, die Form und die Breite der weggeschittenen Kreissegmente, Kerben und Klauen betrifft, in den meisten Anwendungsfällen haben sich jedoch die dargestellten Ausführungsformen als besonders vorteilhaft erwiesen.

## Patentansprüche

1. Sicherungsmutter, an deren Gewindeabschnitt sich konzentrisch ein Sicherungsabschnitt anschließt mit einem elastischen, axial fixierten, in die Verlängerung des Gewindebereichs der Mutter vorspringenden Sicherungs-Ringscheibe (10), die an einem Halsfortsatz (42) der Mutter in Umfangsrichtung reibschlüssig gehaltert ist, wobei die Sicherungs-Ringscheibe eine Dicke entsprechend etwa der Gewindesteigung des Muttergewindes hat und mit ihrem äußeren Umfangsbereich in eine Ringnut (43) des Halsfortsatzes eingreift und an ihrer inneren Randkante (36) ein dem Muttergewinde entsprechendes Gewinde eingeschnitten ist, dessen Gewindegang axial gegenüber dem Muttergewinde um einen geringen, unter der Gewindesteigung des Muttergewindes liegenden Betrag axial versetzt ist, und wobei von der Sicherungs-Ringscheibe drei Kreissegmente (28a, 28b, 28c) in symmetrischer Anordnung weggeschnitten sind dadurch **gekennzeichnet**, daß in die zwischen den drei Kreissegmenten (28a, 28b, 28c) befindlichen Umfangsbereiche (30a, 30b, 30c) der Ringscheibe (10) Kerben (32a, 32b, 32c) eingeformt sind, deren Tiefe (t) im wesentlichen gleich oder kleiner der maximalen radialen Tiefe der Kreissegmente (25a, 25b, 25c) ist.

2. Sicherungsmutter nach Anspruch 1, dadurch **gekennzeichnet**, daß in jeden Umfangsbereich (30a, 30b, 30c) jeweils eine Kerbe (32a, 32b, 32c) mit parallelen Wänden mittig eingeformt ist.

3. Sicherungsmutter nach Anspruch 2, dadurch **gekennzeichnet**, daß die Breite der Kerben (32a, 32b, 32c) zwischen 1/4 und 1/3 der Umfangserstreckung des jeweils zugehörigen Umfangsbereichs (30a, 30b, 30c) beträgt.

4. Sicherungsmutter nach einem der Ansprüche 1 bis 3, dadurch **gekennzeichnet**, daß die Sicherungs-Ringscheibe aus Federstahl besteht.

## Claims

1. A locknut, the screwthreaded portion of which is followed concentrically by a locking portion having an elastic axially fixed annular locking disc (10) which projects into the extension of the screwthreaded zone of the nut and which is frictionally held peripherally on a neck extension (42) of the nut, the annular locking disc having a thickness corresponding substantially to the nut screwthread pitch and engaging, by its outer peripheral zone, in an annular groove (43) of the neck extension, a screwthread which corresponds to the nut screwthread being cut at its inner edge (36) and being axially offset from the nut screwthread by a small amount less than the pitch of the nut screwthread, and three circle segments (28a, 28b, 28c) in a symmetrical arrangement being cut away from the annular locking disc, characterised in that notches (32a, 32b, 32c) are formed in the peripheral zones (30a, 30b, 30c) of the annular disc (10) between the three circle segments (28a, 28b, 28c), the notch depth (t) being substantially equal to or smaller than the maximum radial depth of the circle segments (25a, 25b, 25c).

2. A locknut according to claim 1, characterised in that a notch (32a, 32b, 32c) with parallel walls is formed centrally in each peripheral zone (30a, 30b, 30c).

3. A locknut according to claim 2, characterised in that the width of the notches (32a, 32b, 32c) is between 1/4 and 1/3 of the peripheral extent of the respective associated peripheral zone (30a, 30b, 30c).

4. A locknut according to any one of claims 1 to 3, characterised in that the annular locking disc consists of spring steel.

## Revendications

1. Ecrou de blocage dont la section filetée est prolongée par une section de blocage concentrique comportant un anneau de blocage (10) élastique fixé axialement et en saillie dans le prolongement de la section filetée de l'écrou, l'anneau étant bloqué en glissement à sa périphérie dans un col (42) prolongeant l'écrou, ayant une épaisseur correspondant environ au pas du filetage de l'écrou, sa périphérie pénétrant dans une gorge annulaire (43) du col, et un filetage correspondant au filetage de l'écrou étant réalisé sur son bord interne (36), les filets du bord interne étant légèrement décalés axialement par rapport au filetage de l'écrou d'une quantité inférieure au pas du filetage de l'écrou, l'anneau de blocage étant découpé symétriquement selon trois cordes de cercle (28a, 28b, 28c), caractérisé en ce que les zones périphériques (30a, 30b, 30c) de l'anneau (10) se trouvant entre les trois cordes de cercle (28a, 28b, 28c) comportent des rainures (32a, 32b, 32c) dont la profondeur (t) est essentiellement égale ou inférieure à la profondeur radiale maximale des cordes de cercle (25a, 25b, 25c).

2. Ecrou de blocage selon la revendication 1, caractérisé en ce que, au centre de chaque zone périphérique (30a, 30b, 30c), est formée une rainure (32a, 32b, 32c) à parois parallèles.

3. Ecrou de blocage selon la revendication 2, caractérisé en ce que la largeur des rainures (32a, 32b, 32c) est comprise entre 1/4 et 1/3 de la longueur périphérique de la zone périphérique correspondante (30a, 30b, 30c).

4. Ecrou de blocage selon l'une des revendications 1 à 3, caractérisé en ce que l'anneau de blocage est en acier à ressort.
